# EUROPÄISCHE PATENTSCHRIFT

(11) **EP 0 768 200 B1**
(45) Veröffentlichungstag und Bekanntmachung des Hinweises auf die Patenterteilung: **09.08.2000**
(21) Anmeldenummer: 96116445.6
(22) Anmeldetag: 14.10.1996
(51) Int. Cl.: B60J 7/06

(54) **Faltbares Dach für ein Kraftfahrzeug mit einem faltbaren Dachflächenteil**
Foldable roof for motorvehicle with a foldable roof surface part
Toit pliant pour véhicule automobile avec une partie de la surface du toit pliante

(30) Priorität: 12.10.1995 DE 19538051
(43) Veröffentlichungstag der Anmeldung: 16.04.1997
(73) Patentinhaber: HS-Products Karosseriesysteme GmbH, 82152 Krailling (DE)
(72) Erfinder: Hausrath, Udo, D-82319 Starnberg (DE)

(56) Entgegenhaltungen:
- DE-A- 3 416 286
- US-A- 2 992 041
- US-A- 3 655 238

## Beschreibung

Die Erfindung betrifft ein faltbares Dach für ein Kraftfahrzeug nach dem Oberbegriff des Patentanspruches 1.

Ein derartiges faltbares Dach ist aus der US-A-2 992 041 bekannt. Beim bekannten Faltdach werden die gegeneinander verschiebbaren Holmteile von einem fest am Fahrzeugaufbau angeordneten Zylinder und einer darin axial geführten Kolbenstange gebildet. Im gefalteten Zustand verbleiben die Dachflächenteile an der hinteren fest am Fahrzeugaufbau vorgesehenen Dachfläche.

Aufgabe der Erfindung ist es, ein Faltdach der eingangs genannten Art zu schaffen, bei welchem das Fahrzeug im gefalteten Zustand des faltbaren Dachflächenteils ähnlich wie ein Cabrio gestaltet ist.

Diese Aufgabe wird erfindungsgemäß durch die kennzeichnenden Merkmale des Patentanspruches 1 gelöst.

Hierdurch wird erreicht, daß beim Falten des faltbaren Dachflächenteils die jeweiligen Holmteile so gegeneinander verschoben werden, daß sie aus ihrer normalen Position entfernt werden und im rückwärtigen Teil des Fahrzeugaufbaus untergebracht werden können. Durch das Ineinanderverschieben der Holme und Verschieben der Holme zum rückwärtigen Teil des Fahrzeugs hin wird nicht nur eine Dachöffnung geschaffen, sondern es wird der gesamte Dachaufbau über der Fahrgastzelle entfernt und kann gegebenenfalls nach dem Falten des faltbaren Dachflächenteils und gleichzeitigem Zusammenschieben der Holmteile im rückwärtigen Teil des Fahrzeugaufbaus in einem Verdeckkasten wie bei einem Cabrio abgesenkt werden. Ferner ist es möglich, die zusammengeschobenen Holmteile zusammen mit dem gefalteten Dachflächenteil vom Fahrzeugaufbau nach Lösen einer Verriegelung zu entfernen. Man gewinnt auf diese Weise eine vollständig geöffnete Fahrgastzelle im Fahrzeug, wie das bei einem Cabrio der Fall ist.

Es kann jedoch der zusammengeschobene Dachaufbau außerhalb des Verdeckkastens unversenkt am Fahrzeugaufbau belassen werden.

Beim faltbaren Dachflächenteil kann es sich in herkömmlicher Weise um eine faltbare Stoffbahn handeln, die beim Verschieben der Holmteile gegeneinander in Richtung zur Rückseite des Fahrzeugaufbaus hin gefaltet wird.

Der faltbare Dachflächenteil kann jedoch auch aus mehreren starren Dachflächenstükken gebildet werden, die beim Zusammenschieben der Holmteile übereinander geschoben werden, so daß sich ebenfalls eine vollständige Öffnung der Fahrgastzelle nach oben hin ergibt.

Während des Verschiebens der Holmteile sowohl in Richtung zur Rückseite des Fahrzeugs hin beim Öffnen des Daches als auch beim Verschieben nach vorne beim Schließen des Daches sind die Holmteile der beiden Holme bevorzugt synchron gegeneinander verschiebbar.

Die Holmteile eines jeweiligen Holms sind bevorzugt aneinander verschiebbar gelagert.

Dadurch, daß die gegeneinander verschiebbaren Holmteile während des Verschiebens am hinteren Teil des Holms am Fahrzeugaufbau abgestützt sind, läßt sich erreichen, daß oberhalb der oberen Fensterkanten sämtliche Dachkomponenten, d.h. sowohl das mittlere faltbare Dachflächenteil als auch die beiden seitlichen starren Holme, welche die Dachverkleidungen beinhalten können, vollständig in den rückwärtigen Bereich des Fahrzeugaufbaus verschoben werden können.

Für die Verschiebbarkeit der Holmteile gegeneinander können die Holmteile Kulissenführungen aufweisen, in denen Teile des jeweils benachbarten Holmteils im wesentlichen in Längsrichtung der Holmteile geführt sind. Ferner kann durch die Kulissenführungen die Bewegung der Holmteile quer zur Längsrichtung geschaffen werden, so daß die Holmteile in einem übereinander liegenden Stapel im zusammengeschobenen Zustand bei geöffnetem Dach vorliegen.

Anhand der Figuren wird an einem Ausführungsbeispiel die Erfindung noch näher erläutert. Es zeigt:
- Fig. 1:: eine Draufsicht auf einen der beiden seitlichen Holme;
- Fig. 2:: eine Seitenansicht des Holmes der Fig. 1;
- Fig. 3:: den Holm bei gefaltetem Dach in zusammengeschobenem Zustand;
- Fig. 4:: eine Verriegelungseinrichtung für den Holm in Draufsicht;

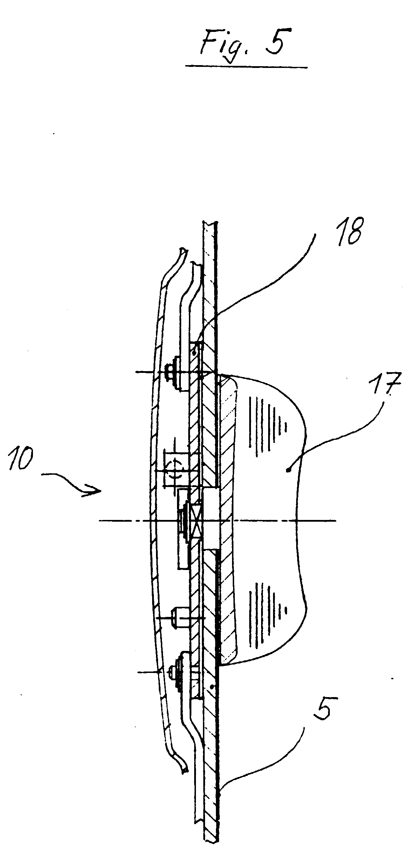

- Fig. 5:: im Schnitt eine Betätigungseinrichtung für die Verriegelungseinrichtung, welche in Fig. 4 ebenfalls in Draufsicht dargestellt ist; und
- Fig. 6:: eine Frontansicht auf einen Holm.

Das in den Figuren dargestellte faltbare Dach für ein Kraftfahrzeug besitzt zwei Holme 1, von denen ein Holm dargestellt ist. Diese beiden Holme können Bestandteil der seitlichen Dachflächen sein. Die beiden Holme dienen zur Führung eines zwischen ihnen in Fahrzeuglängsrichtung geführten faltbaren Dachflächenteils 5. Dieser faltbare Dachflächenteil 5 ist beim dargestellten Ausführungsbeispiel gebildet von einer faltbaren Stoffbahn. Er kann jedoch auch aus übereinander schichtbaren starren Dachflächenstücken bestehen.

Jeder der beiden Holme 1 ist aus mehreren gegeneinander verschiebbaren Holmteilen 2, 3 und 4 gebildet. Beim dargestellten Ausführungsbeispiel sind ein vorderes Holmteil 2, ein mittleres Holmteil 3 und ein hinteres Holmteil 4 für jeden der beiden Holme 1 vorgesehen.

Die Holmteile sind im wesentlichen in ihren Längsrichtungen gegeneinander verschiebbar. Hierzu besitzen die Holmteile Kulissenführungen 7 und 8. Beim dargestellten Ausführungsbeispiel ist das hintere Holmteil 4 am Fahrzeugaufbau, nämlich an einer C-Säule 6 des Fahrzeugaufbaus befestigt. An diesem hinteren Holmteil 4 ist verschiebbar das mittlere Holmteil 3 gelagert. Hierzu besitzt das mittlere Holmteil 3 die Kulissenführung 8. Diese Kulissenführung 8 ist ähnlich ausgebildet wie die Kulissenführung 7 am vorderen Holmteil 2, mit welcher das Holmteil 2 am Holmteil 3 ebenfalls im wesentlichen in Längsrichtung verschiebbar gelagert ist. Am mittleren Holmteil 3 sind Führungsstifte 11 und 12 befestigt, welche in die Kulissenführung 7 am vorderen Holmteil 2 ragen. Die gleiche Anordnung ist vorhanden zwischen dem hinteren Holmteil 4 und dem verschiebbar daran gelagerten mittleren Holmteil 3. Nicht näher dargestellte Führungsstifte sind am hinteren Holmteil 4 befestigt und ragen in die Kulissenführung 8 am mittleren Holmteil 3.

Die Kulissenführungen 7 und 8 besitzen einen sich im wesentlichen in Längsrichtung erstreckenden Kulissenführungsteil. Ferner besitzen die Kulissenführungen 7 und 8 sich quer zur Längsrichtung erstreckenden Kulissenführungsteile 13 und 14. In die jeweiligen Enden der sich quer erstreckenden Kulissenführungsteile 13 und 14, welche als Endanschläge wirken, ragen die Führungsstifte 11 und 12, wenn das Dach geschlossen ist.

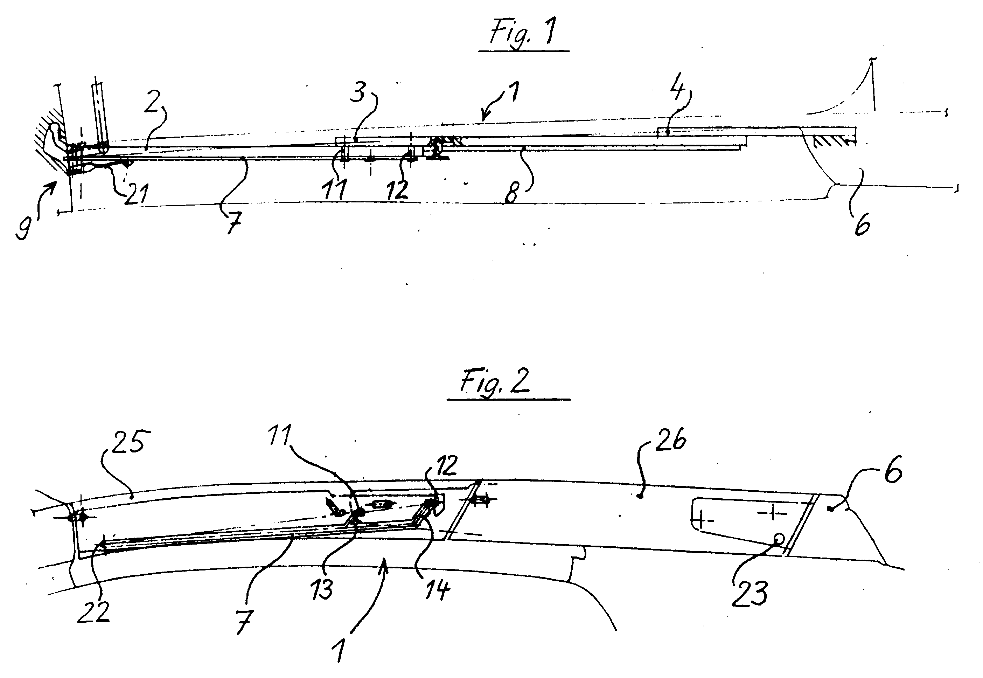

In der geschlossenen Dachposition werden die beiden Holme 1 an ihren vorderen Enden mit Hilfe von Verriegelungseinrichtungen 9, von denen eine in der Fig. 1 dargestellt ist, am Fahrzeugaufbau im oberen Bereich der A-Säule oder im seitlichen Bereich des oberen Frontscheibenrahmens verankert. Die beiden Verriegelungseinrichtungen 9 besitzen jeweils einen Sperrhebel 15. Der Sperrhebel 15 ist um eine Schwenkachse 16 am vorderen Ende des vorderen Holmteiles 2 gelagert. Zum Betätigen bzw. Verschwenken des Sperrhebels 15 dient eine am vorderen Ende etwa in der Mitte des faltbaren Dachflächenteils 5 befestigte Betätigungseinrichtung 10. Die Betätigungseinrichtung 10 wirkt synchron auf beide Verriegelungseinrichtungen 9 der Holme 1. Die Betätigungseinrichtung 10 kann in bekannter Weise ein mit einem Drehgriff 17 versehenes Drehteil 18 aufweisen, welches über Schubstangen 19 auf die Betätigung bzw. Verschwenkung der Sperrhebel 15 um ihre Achsen 16 zum Lösen und Schließen der Verriegelung wirkt.

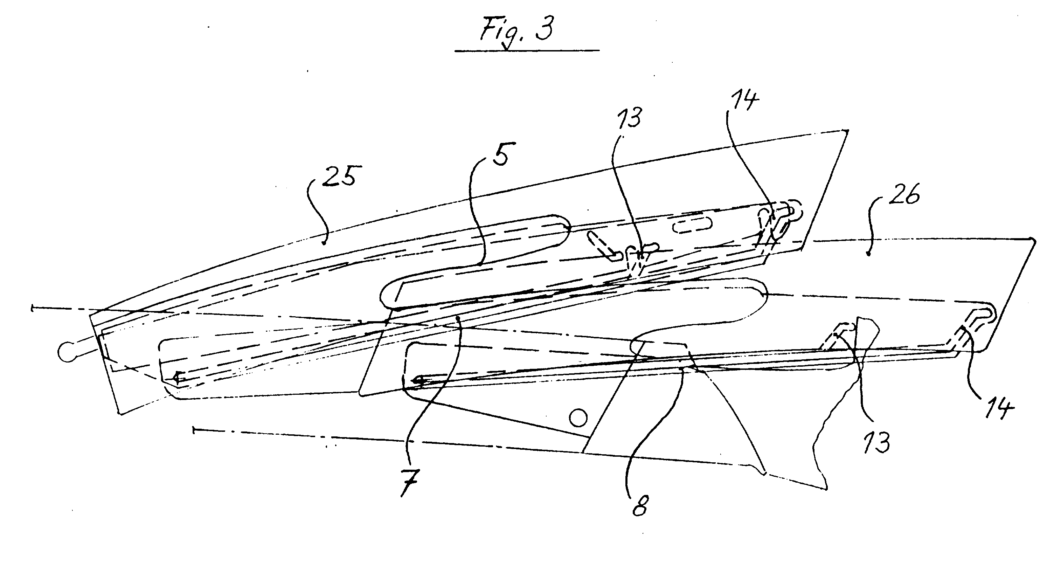

In den Figuren 1 und 2 sind die Komponenten des Faltdaches in den Stellungen dargestellt, in welchen das Dach geschlossen ist. Die Sperrhebel 15 der Verriegelungseinrichtungen 9 greifen in entsprechende Ausnehmungen 20 am Fahrzeugaufbau ein. Zum Öffnen des Daches werden durch Drehen des Drehteiles 18 die Sperrhebel 15 aus ihren Verriegelungspositionen geschwenkt, wobei über eine Mitnehmerlasche 21 die Schwenkbewegung auf die plattenförmig ausgebildete Kulissenführung 7 des vorderen Holmteils 2 übertragen wird. Das an der Kulissenführung 7 befestigte Holmteil 2 führt dabei eine Hubbewegung gegenüber dem mittleren Holmteil 3 aus. Dabei werden die Führungsstifte 11 und 12 entlang der quer zur Längsrichtung sich erstreckenden Kulissenführungsteile 13 und 14 geführt. Beim weiteren Nachhintenverschieben schiebt sich das vordere Holmteil 2 mit seiner Kulissenführung 7 schräg nach oben über das mittlere Holmteil 3, bis die jeweiligen Führungsstifte 11 am vorderen Endanschlag 22 des sich in Längsrichtung erstreckenden Kulissenführungsteils anschlagen. Beim Weiternachhintenschieben des Dachaufbaus wiederholt sich dieser Vorgang zwischen dem mittleren Holmteil 3 und dem hinteren Holmteil 4, bis die Holmteile die in der Fig. 3 dargestellte Anordnung haben.

Bei diesem Nachhintenschieben der Holmteile 2 und 3 wird gleichzeitig das dazwischen aufgespannte faltbare Dachflächenteil 5, beispielsweise in Form einer Stoffaltbahn gefaltet, wie es in Fig. 3 dargestellt ist.

In der in der Fig. 2 dargestellten Anordnung können die Holmteile 2, 3 und 4 beispielsweise durch Lösen einer Verriegelung 23 vom Fahrzeugaufbau gelöst werden und entfernt werden. Es ist jedoch auch möglich, nach dem Lösen der Verriegelung 23 die übereinander geschobenen Holmteile und das gefaltete Dachflächenteil 5 in einem Heckkasten im Fahrzeugaufbau zu versenken. Das Kraftfahrzeug hat dann das Aussehen eines Cabrios, da alle Dachelemente oberhalb des Fahrgastraumes entfernt sind.

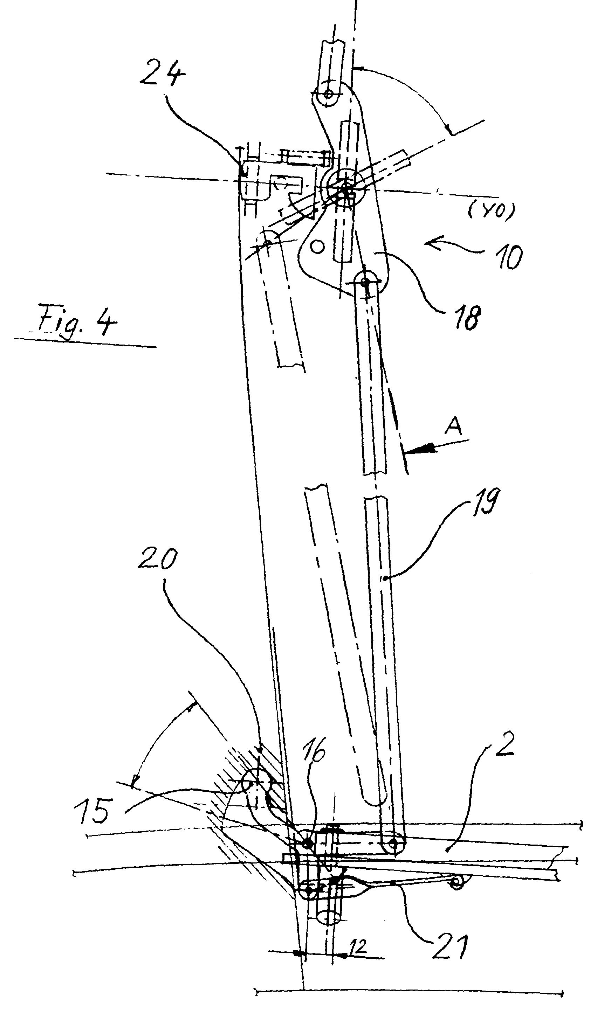

Beim Schließen des Daches werden die Holmteile 2 und 3 in entgegengesetzten Richtungen aus der in der Fig. 3 dargestellten Position nach vorne verschoben, wobei die Führungsstifte 11 und 12 in den Kulissenführungen 7 und 8 geführt werden, bis sie nach ihrer Führung durch die quer verlaufenden Kulissenführungsteile 13 und 14 in ihre in den Figuren 1 und 2 dargestellten Endpositionen gelangen. Das endgültige Schließen und Verriegeln des Daches kann dann erfolgen, wenn ein Sicherungsteil 24 durch einen Anschlag-Dachrand eingefahren ist, wie es in Fig. 4 dargestellt ist. Durch Verschwenken des Drehteils 18 mit Hilfe des Drehgriffes 17 werden dann die Sperrhebel 15 der Verriegelungseinrichtungen 9 in die in der Fig. 1 dargestellte Verriegelungsposition gebracht.

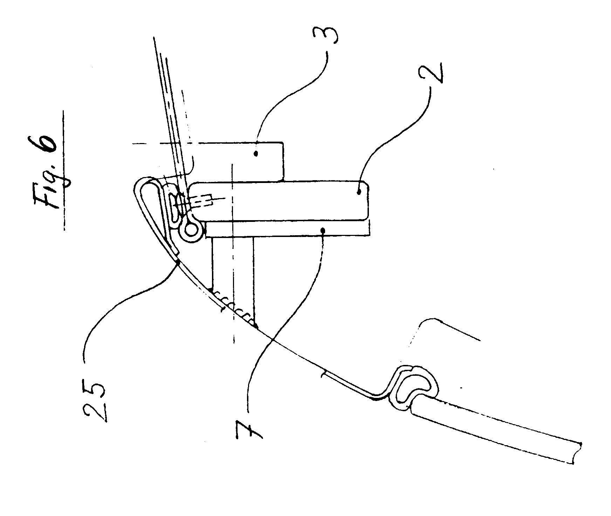

Das Öffnen und Schließen des Daches kann insbesondere an solchen Fahrzeugen erleichtert werden, bei welchen der vordere Teil der Dachkonstruktion breiter ausgebildet ist als der hintere Teil der Dachkonstruktion. In diesem Fall gehen beim Öffnen des Daches die in Frontansicht (Fig. 6) nebeneinander angeordneten Holmteile 2, 3 und die daran befestigten seitlichen Dachverkleidungen 25, 26 (Fig. 2), die Kulissenführungen und die Holmteile fächerartig auseinander, so daß der Weg zum Öffnen frei wird. Beim Schließen erfolgt der Bewegungsablauf in entgegengesetztem Sinne.

## Patentansprüche

1. Faltbares Dach für ein Kraftfahrzeug mit einem faltbaren Dachflächenteil, welches in der Mitte zwischen zwei seitlichen starren Holmen gehalten wird, wobei die jeweiligen Holme (1) aus wenigstens zwei gegeneinander verschiebbaren Holmteilen (2, 3, 4) bestehen, dadurch gekennzeichnet, daß die Holmteile (2, 3, 4) beim Verschieben jeweils eine Hubbewegung, die quer zur Verschiebung in Längsrichtung verläuft, relativ zueinander ausführen.

2. Faltbares Dach nach Anspruch 1, dadurch gekennzeichnet, daß die Holmteile (2, 3, 4) der beiden Holme (1) synchron gegeneinander verschiebbar sind.

3. Faltbares Dach nach Anspruch 1 oder 2, dadurch gekennzeichnet, daß die Holmteile (2, 3, 4) eines jeweiligen Holms (1) aneinander verschiebbar gelagert sind.

4. Faltbares Dach nach einem der Ansprüche 1 bis 3, dadurch gekennzeichnet, daß die gegeneinander verschiebbaren Holmteile (2, 3, 4) während des Verschiebens am hinteren Teil des Holms (1) am Fahrzeugaufbau abgestützt sind.

5. Faltbares Dach nach einem der Ansprüche 1 bis 4, dadurch gekennzeichnet, daß das gefaltete Dachflächenteil (5) und die dabei zusammengeschobenen Holmteile (2, 3, 4) im Fahrzeugaufbau versenkbar sind.

6. Faltbares Dach nach einem der Ansprüche 1 bis 5, dadurch gekennzeichnet, daß ein vorderes Holmteil (2) an einem mittleren Holmteil (3) und das mittlere Holmteil (3) an einem hinteren Holmteil (4), verschiebbar gelagert sind.

7. Faltbares Dach nach einem der Ansprüche 1 bis 6, dadurch gekennzeichnet, daß das hintere Holmteil (4) während des Verschiebens ortsfest am Fahrzeugaufbau abgestützt ist.

8. Faltbares Dach nach einem der Ansprüche 1 bis 7, dadurch gekennzeichnet, daß die Holmteile (2, 3, 4) im wesentlichen in ihren Längsrichtungen gegeneinander verschiebbar gelagert sind.

9. Faltbares Dach nach einem der Ansprüche 1 bis 8, dadurch gekennzeichnet, daß die Holmteile (2, 3, 4) in an den Holmteilen vorgesehenen Kulissenführungen (7, 8) geführt sind.

10. Faltbares Dach nach einem der Ansprüche 1 bis 9, dadurch gekennzeichnet, daß die beiden vorderen Holmteile (2) vom Fahrzeugaufbau mittels zugeordneter Verriegelungseinrichtungen (9) verriegelbar sind.

11. Faltbares Dach nach Anspruch 10, dadurch gekennzeichnet, daß die den beiden vorderen Holmteilen (2) zugeordneten Verriegelungsvorrichtungen (9) mittels einer gemeinsamen an einem vorderen Teil des Dachflächenteils (5) vorgesehenen Betätigungseinrichtung (10) synchron betätigbar sind.

## Claims

1. A foldable roof for a motor vehicle comprising a foldable roof surface portion which is held in the centre between two lateral rigid bars, wherein the respective bars (1) comprise at least two bar portions (2, 3, 4) which are displaceable relative to each other, characterised in that upon displacement the bar portions (2, 3, 4) respectively perform relative to each other a stroke movement which is transverse with respect to the displacement in the longitudinal direction.

2. A foldable roof according to claim 1 characterised in that the bar portions (2, 3, 4) of the two bars (1) are displaceable synchronously relative to each other.

3. A foldable roof according to claim 1 or claim 2 characterised in that the bar portions (2, 3, 4) of a respective bar (1) are supported displaceably on each other.

4. A foldable roof according to one of claims 1 to 3 characterised in that the bar portions (2, 3, 4) which are displaceable relative to each other are supported during such displacement at the rear part of the bar (1) on the vehicle body structure.

5. A foldable roof according to one of claims 1 to 4 characterised in that the folded roof surface portion (5) and the bar portions (2, 3, 4) which are pushed together in that case can be lowered in the vehicle body structure.

6. A foldable roof according to one of claims 1 to 5 characterised in that a front bar portion (2) is supported displaceably on a central bar portion (3) and the central bar portion (3) is supported displaceably on a rear bar portion (4).

7. A foldable roof according to one of claims 1 to 6 characterised in that the rear bar portion (4) is supported stationarily on the vehicle body structure during displacement.

8. A foldable roof according to one of claims 1 to 7 characterised in that the bar portions (2, 3, 4) are supported displaceably relative to each other substantially in the longitudinal directions thereof.

9. A foldable roof according to one of claims 1 to 8 characterised in that the bar portions (2, 3, 4) are guided in sliding guides (7, 8) provided on the bar portions.

10. A foldable roof according to one of claims 1 to 9 characterised in that the two front bar portions (2) are lockable to the vehicle body structure by means of associated locking devices (9).

11. A foldable roof according to claim 10 characterised in that the locking devices (9) associated with the two front bar portions (2) are synchronously actuable by means of a common actuating device (10) provided at a front part of the roof surface portion (5).

## Revendications

1. Capote pliante pour un véhicule automobile comportant une partie de surface de toit pliante qui est maintenue au milieu entre deux longerons latéraux rigides, chaque longeron (1) consistant en au moins deux parties (2, 3, 4) de longeron coulissant l'une par rapport à l'autre, caractérisée en ce que les parties (2, 3, 4) de longeron exécutent lors du coulissement chaque fois une course l'une par rapport à l'autre, qui s'étend transversalement au coulissement dans la direction longitudinale.

2. Capote pliante suivant la revendication 1, caractérisée en ce que les parties (2, 3, 4) des deux longerons (1) peuvent coulisser en synchronisme l'une par rapport à l'autre.

3. Capote pliante suivant la revendication 1 ou 2, caractérisée en ce que les parties (2, 3, 4) de chaque longeron (1) sont montées de manière à pouvoir coulisser l'une sur l'autre.

4. Capote pliante suivant l'une des revendications 1 à 3, caractérisée en ce que les parties (2, 3, 4) coulissant l'une par rapport à l'autre sont soutenues, pendant le coulissement, à la partie arrière du longeron (1) sur la carrosserie du véhicule automobile.

5. Capote pliante suivant l'une des revendications 1 à 4, caractérisée en ce que la partie (5) de surface de toit pliée et les parties (2, 3, 4) de longeron emmanchées peuvent être escamotées dans la carrosserie du véhicule automobile.

6. Capote pliante suivant l'une des revendications 1 à 5, caractérisée en ce qu'une partie (2) avant de longeron est montée coulissante sur une partie (3) médiane de longeron et en ce que la partie (3) médiane de longeron est montée coulissante sur une partie (4) arrière de longeron.

7. Capote pliante suivant l'une des revendications 1 à 6, caractérisée en ce que la partie (4) arrière de longeron est soutenue, pendant le coulissement, à poste fixe sur la carrosserie du véhicule automobile.

8. Capote pliante suivant l'une des revendications 1 à 7, caractérisée en ce que les parties (2, 3, 4) de longeron sont montées de manière à pouvoir coulisser l'une par rapport à l'autre sensiblement dans leur direction longitudinale.

9. Capote pliante suivant l'une des revendications 1 à 8, caractérisée en ce que les parties (2, 3, 4) de longeron sont guidées sur des guides (7, 8) de coulisse prévus sur les parties de longeron.

10. Capote pliante suivant l'une des revendications 1 à 9, caractérisée en ce que les deux parties (2) avant de longeron de la carrosserie du véhicule automobile peuvent être verrouillées au moyen de dispositif (9) de verrouillage associé.

11. Capote pliante suivant la revendication 10, caractérisée en ce que les dispositifs (9) de verrouillage associés aux deux parties (2) avant de longeron peuvent être actionnés en synchronisme au moyen d'un dispositif (10) d'actionnement commun prévu sur une partie avant de la partie (5) de surface du toit.
